# EUROPEAN PATENT SPECIFICATION

(11) **EP 1 211 787 B1**
(45) Date of publication and mention of the grant of the patent: **10.11.2004**
(21) Application number: 01126940.4
(22) Date of filing: 13.11.2001
(51) Int. Cl.: H02K 29/10, H02P 1/46

(54) **Electric motor with electronic control**
Elektrischer Motor mit elektronischer Steuerung
Moteur électrique avec commande électronique

(30) Priority: 27.11.2000 IT MI002549
(43) Date of publication of application: 05.06.2002
(73) Proprietor: ELCO S.p.A., 24100 Bergamo (IT)
(72) Inventor: Colombo, Enzo, 24049 Verdello (Bergamo) (IT)
(74) Representative: Petruzziello, Aldo

(56) References cited:
- EP-A- 1 052 764
- WO-A-00/19593
- FR-A- 2 458 933

## Description

The present invention refers to an electric motor with electronic control and in particular to a synchronous electric motor with a permanent magnet rotor.

As is known, an electric motor serves to convert absorbed electrical energy to mechanical energy. The electric motor comprises a rotating part, called the rotor, integral with a shaft to which the mechanical energy must be transmitted. The rotor is housed inside a fixed part of the motor called the stator.

The rotor and the stator comprise sets of windings. These are an excitation winding intended to be traversed by electrical currents which generate a magnetic drive force necessary to create a magnetic induction flux and an armature winding intended to be traversed by electrical currents which, being in the magnetic induction field, cause a combination of mechanical actions contributing to provide torque on the axis of rotation of the rotor. By way of example, specific reference will be made herein to a synchronous electric motor with a permanent magnet rotor, it being understood that the invention also extends to asynchronous motors with rotors not having a magnetic structure.

In particular, the synchronous motor with a permanent magnet rotor comprises a rotor consisting of permanent magnets and a stator which carries windings supplied with alternating current for determination of a rotating magnetic field. The rotor, thanks to its magnetic polarization, being situated in the rotating magnetic field generated by the stator, tends to rotate at the speed of synchronism, imposed by the alternating current absorbed from the mains supply.

Synchronous electric motors with a permanent magnet rotor have the main drawback that they are not self-starting, therefore they must be coupled with another starter motor or with an electronic circuit which controls start-up of the motor.

Another drawback of synchronous electric motors is that they are not very versatile, since they must be powered exclusively at the frequency imposed by the mains supply (synchronism frequency).

Another drawback of electric motors is represented by the possibility of blocking of the rotor. In fact the rotor can be blocked, mainly through a mechanical fault, such as breakage of a bearing or bushing interposed between the rotor and the stator, for example, or due to the presence of a foreign body that blocks the fan which is driven by the drive shaft. Electric motors according to the prior art do not have any system of protection against blocking of the rotor.

EP 1 130 757 discloses a control circuit for electric motor with permanent rotor magnet. Said control circuit comprises a switch intended for switching from a starting condition to a running condition of the motor rotor.

EP 1 052 764 discloses the use of Hall effect magnetic sensor intended for detecting the position of a permanent magnet rotor. Further EP 1 052 764 discloses a procedure for controlling the rotor block.

FR 2 458 933 discloses an AC motor without collector. The control circuit of said motor has a diode bridge rectifier, a filtering capacitor and four transistor.

An object of the present invention is to eliminate the drawbacks of the prior art, providing an electric motor with electronic control which allows the motor to be started up and powered with an alternating voltage at any frequency, regardless of the mains supply frequency.

Another object of the present invention is to provide an electric motor with electronic control which provides a system of protection against blocking of the rotor.

These objects are achieved in accordance with the invention with the characteristics listed in appended independent claim 1.

Advantageous embodiments of the invention are apparent from the dependent claims.

The electric motor according to the invention comprises an electronic control able to manage the various operating modes of the motor. The electronic control comprises a sensor to detect the position and rotation of the rotor, a microprocessor which receives signals from the sensor indicative of the position of the rotor and the rotational speed of the rotor and two switches controlled by the microprocessor to send an alternating voltage input to the windings of the motor.

Thanks to this electronic control system various functions of the motor can be implemented.

The sensor, by detecting the position of the rotor, allows it to be started up without the need for a further start-up motor.

Furthermore, the microprocessor, by controlling the on/off period of the switches, is able to vary the frequency of the supply voltage to be applied to the motor, independently of the frequency of the main voltage.

Furthermore, the synchronization device is able to synchronize the frequency of the supply voltage of the motor with the frequency of the mains voltage, allowing precise control of the rotational speed of the rotor which is locked to the frequency of the main power supply voltage.

Furthermore, the electronic control according to the invention allows a procedure against blocking of the rotor to be implemented. In fact, if within a predetermined period the rotor speed does not exceed a predetermined threshold, this indicates that the rotor is blocked; therefore the microprocessor keeps the switches turned off so as not to power the motor, avoiding any damage to the rotor due to an attempt to force the rotor to rotate. This rotor block control procedure can be repeated up to a predetermined number of times, to check whether an accidental block has occurred.

Further characteristics of the invention will be made clearer by the detailed description that follows, referring to a purely exemplary and therefore non-limiting embodiment thereof, illustrated in the appended drawings, in which:
Figure 1 is a perspective exploded view illustrating an electric motor according to the invention;
Figure 2 is a perspective, exploded view of the electric motor of Figure 1, taken from another angle;
Figure 2A is a perspective exploded view, illustrating the two half-shells of the casing of the electric motor according to the invention;
Figure 3 is an electrical diagram illustrating the electronic control of the motor according to the invention;
Figure 4 is a flow chart illustrating the various phases of operation of the electronic control according to the invention.

The electric motor with electronic control according to the invention will be described with the aid of the figures.

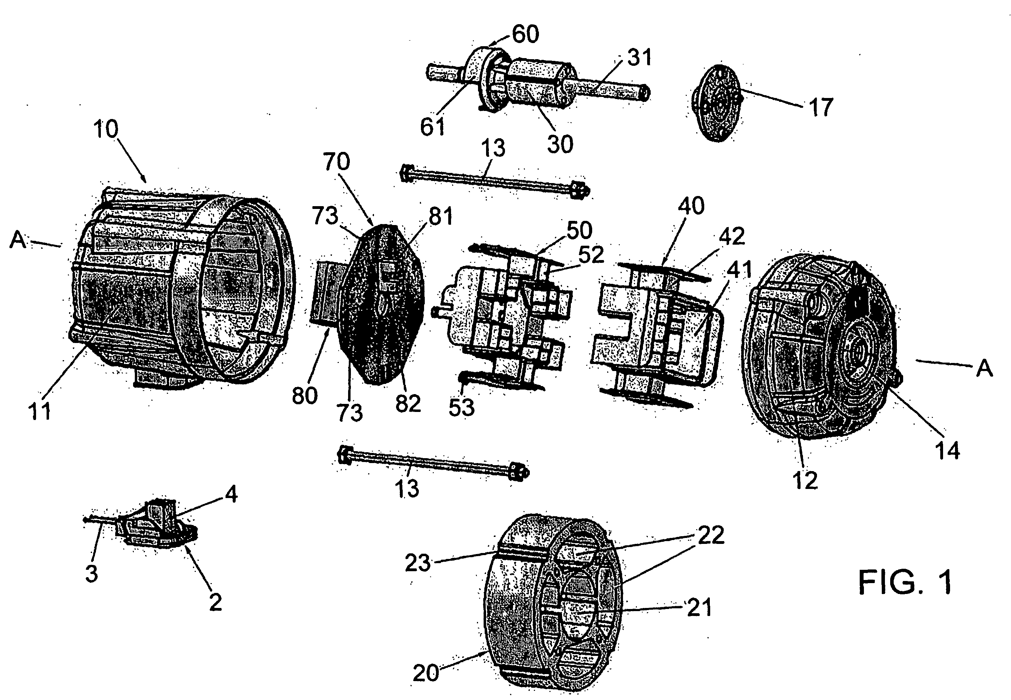

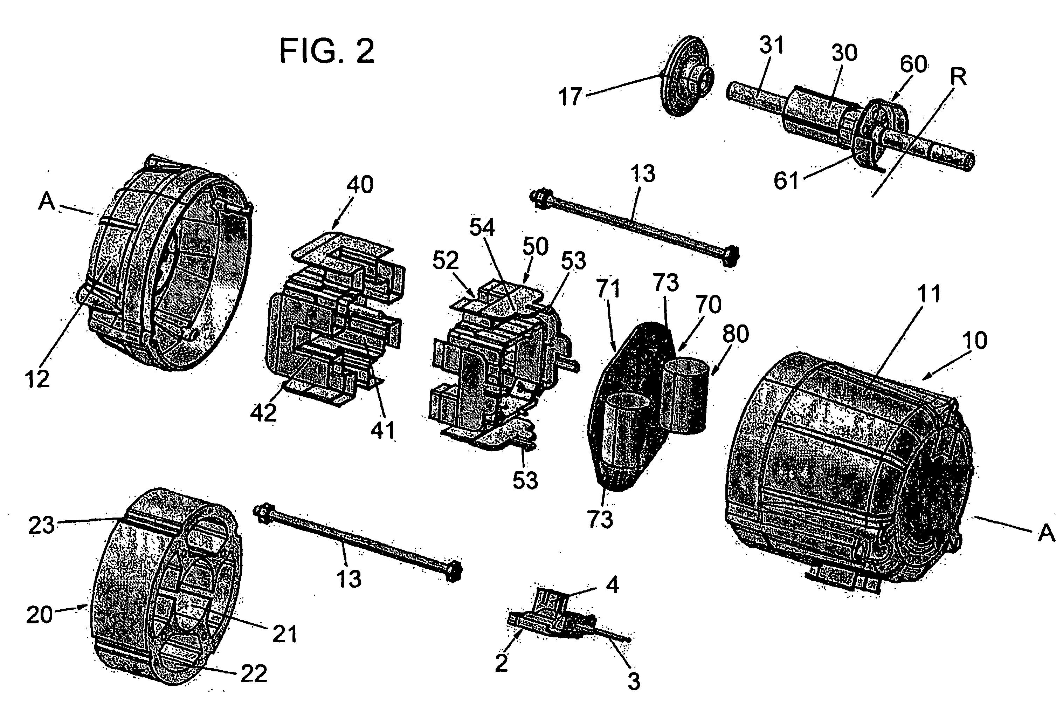

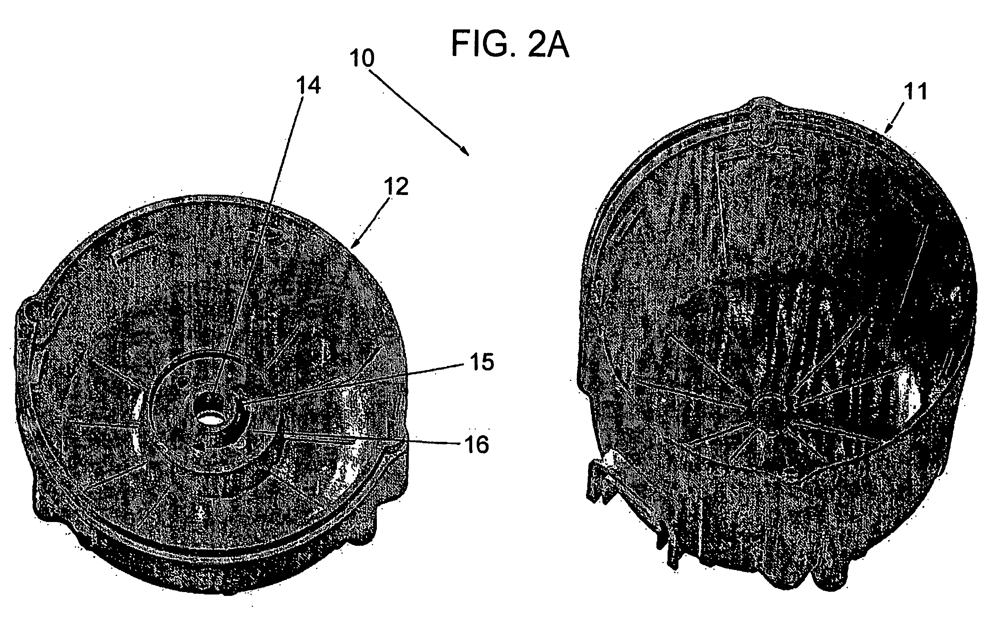

In figures 1 and 2 an electric motor according to the invention, denoted as a whole by reference numeral 100 is illustrated. The motor 100 comprises a casing 10 consisting of a first half-shell 11 and a second half-shell 12. The two half-shells 11 and 12 are assembled, by means of fixing rods 13, so as to generate inside them a cylindrical chamber to contain the motor members. The axis of the casing 10 is denoted with the letter A. The half-shell 12 has an axial hole 14 through which the drive shaft exits.

The motor members comprise a stator 20 and a rotor 30.

The stator 20, substantially cylindrical in shape, has an axial hole 21 destined to receive the rotor 30 and four peripheral recesses 22 to receive the stator windings (not shown). The stator 20 is sandwiched between a first rigid insulating support 40 and a second rigid insulating support 50.

The first insulating support 40 has an axial hole 41 in register with the hole 21 of the stator 20 and four slots 42 in register with the slots 22 of the stator 20. The second insulating support 50 also has four slots 52 in register with the slots 22 of the stator 20.

The stator 20 has on its cylindrical surface four grooves 23, one half of which engages inside the second half-shell 12 of the casing 10 and the other half inside the first half-shell 11. In this manner, the stator 20 is axially disposed inside the casing 10 and is integral therewith.

The rotor 30 is substantially cylindrical in shape, with a smaller diameter than the diameter of the axial hole 21 of the stator 20, so as to be able to be positioned therein. The rotor 30 is a permanent magnet rotor, per se known and therefore not further explained in detail.

The rotor 30 comprises a shaft 31 disposed axially and integral therewith. The shaft 31 of the rotor engages in bearings or bushings 15 (figure 2A) fixed with a spring 16 inside the half-shell 12 of the casing and a flange 17 so that the shaft 31 can exit from the axial hole 14 of the half-shell 12, so that a load can be applied thereto. The flange 17 is applied on the outside of the casing 12 to support a fan.

As is known in the art, an electric motor with a permanent magnet rotor must have a start-up system to allow start-up of rotation of the rotor. Generally, said start-up system can be provided by an electronic control.

The electronic control of the motor 100 according to the invention will now be described.

A screen or shield 60 forming part of the electronic control is mounted about the shaft 31, rearward of the rotor 30. The screen 60, as shown in Figure 2, has two screening walls 61, in the form of curved plates, disposed diametrically opposite each other and having a normal axis R substantially coinciding with a radial axis of the rotor shaft 31.

The electronics of the electronic control of the motor, denoted as a whole with reference numeral 80, is disposed on a plate or board 70 suited to be fixed on the second rigid insulating support 50. For this purpose, the second insulating support 50 has four hooks 53 intended to engage in four holes 73 peripherally formed on the plate 70. The second insulating support 50 has four rectangular tongues 54 designed to abut against the peripheral surface of the plate 70 to insulate the electronics 80 from the windings (not shown) of the stator 20.

The motor 100 comprises an electrical connector 2 connected to a power cable 3 with a plug (not shown) for connection to the mains power supply. The connector 2 has a terminal 4 which connects to a complementary connecting element provided in the board 70 to power the electronics 80. The connector 2 can connect directly to the board 70 through suitable connectors to carry the power supply to the various electronic components.

The electronics 80 comprise a position sensor 81, of the optical type, disposed on a surface 71 of the plate 70 facing toward the stator 20. The position sensor 81 is fork-shaped with two arms that define a gap 82 such as to allow the passage of the screening surfaces 61 of the screen 60, when the rotor 30 turns around its own axis.

The optical sensor 81 comprises a photodiode (transmitter) able to emit a light signal and a phototransistor (receiver) able to receive the light signal emitted by the photodiode. The receiver furthermore emits an output voltage signal indicative of the light signal received.

The transmitter and the receiver are respectively disposed on the two arms of the fork of the optical sensor 81. In this manner, when the screening surface 61 passes in the air gap 82 of the optical sensor 81, the luminous signal received by the receiver is interrupted. Thus, during rotation of the motor there is an output pulse train from the receiver of the optical sensor whose frequency is equal to the frequency of rotation of the rotor 30.

As an alternative to the optical sensor 81, a magnetic sensor with a Hall effect can be provided, which detects the magnetic field produced by the permanent magnets located on the rotor 30. In this case, the screen 60 on the shaft 31 of the rotor 30 is not provided. This magnetic sensor can be positioned inside the stator armature and facing toward the rotor 30, then connected by means of an electrical cable to the board 70 in which the electronics 80 is installed.

In this way, during rotation of the rotor 30, alternation of the positive pole and negative pole of the magnetic field generated by the permanent magnets produces an output pulse train from the magnetic sensor with a frequency equal to the frequency of rotation of the rotor.

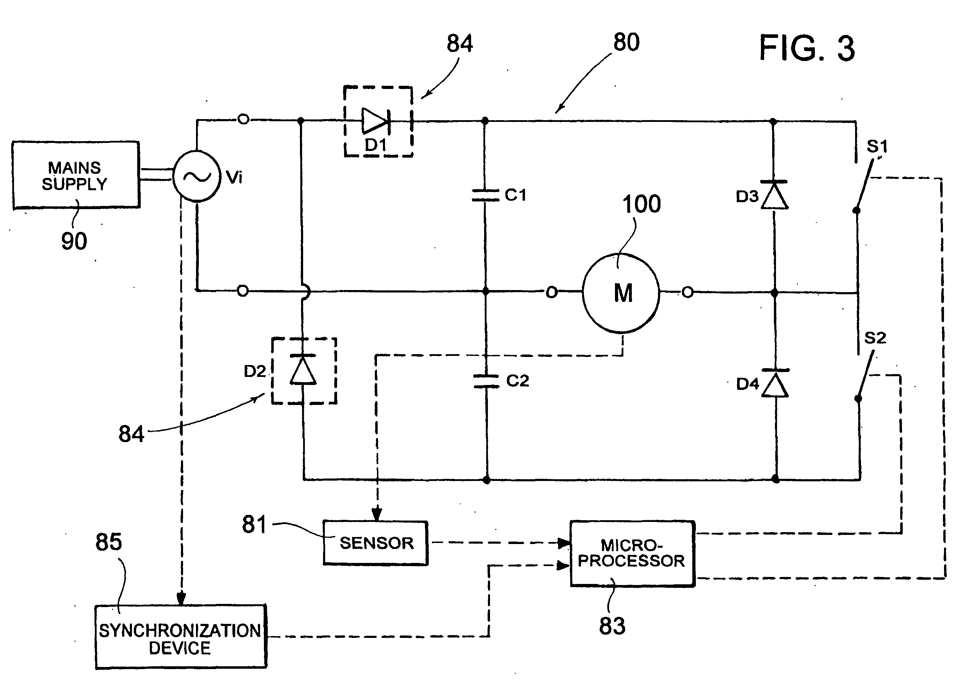

Figure 3 illustrates an electrical diagram of the electronics 80 for running of the motor 100. The sensor 81 is connected to a control unit 83 consisting of a microprocessor. The microprocessor 83 controls two electronic switches S1 and S2 which open/close the electrical supply circuit of the motor 100 windings.

The switches S1 and S2 can, for example, be two MOSFET transistors and the microprocessor 83 has two output pins connected to the respective gate electrodes of the MOSFET transistors S1 and S2 to control turning on/off thereof. Turning on means when the MOSFET is in the conduction area and the circuit is closed; turning off means when the MOSFET is in the cut-off area and the circuit is open. Two recirculation diodes D3 and D4 are positioned parallel to the MOSFET transistors S1 and S2, respectively.

The electrical supply to the motor 100 takes place by means of connection to the main power supply 90. A sinusoidal alternating voltage Vi is taken from the mains supply and sent to an input power stage, consisting of a rectifier circuit 84 comprising two diodes D1 and D2. The rectifier circuit 84 serves to transform the alternating main voltage Vi into a one-way pulsating voltage.

At the output from the rectifying circuit 84 are two smoothing capacitors C1, C2 which serve to convert the pulsating voltage to a direct voltage (at least as a first approximation) which constitutes the bias voltage of the MOSFETs S1 and S2. In fact, as is known in the art, the MOSFETs must be supplied with direct voltage.

Since the motor 100 is a synchronous motor with a permanent magnet rotor, it is able to deliver an electromotive torque only if supplied with an alternating voltage. If the motor 100 is supplied at a constant voltage, like the output voltage from the smoothing capacitors C1 and C2, it is not able to start.

The object of the electronic control is to allow running of the motor 100 at variable speed, irrespective of the frequency imposed by the mains supply 90. This is possible through the creation of an intermediate stage consisting of smoothing capacitors C1 and C2 which convert the alternating main voltage to direct voltage and a further inverter stage consisting of the switches S1 and S2 which allows production of an alternating supply voltage, at variable frequency, starting from a direct voltage.

The sensor 81 acts as an angular position transducer and provides information on the position of the rotor 30. According to the information received from the sensor 81, the microprocessor 83 alternately enables opening/closing of the switches S1 and S2, so as to present an alternating voltage as the input to the motor 100, with the necessary phase shift with respect to the magnetic flux of the rotor 30 to ensure development of the accelerating torque of the rotor 30 and allow start-up of the motor.

In this manner, the rotor is caused to accelerate until it is brought to a speed which represents the state of equilibrium between the motive torque imparted to the rotor 30 and the resisting torque of the load imposed on the shaft 31 of the rotor. The circuit diagram has been designed so as not to require dissipating elements for damping of the switching overvoltages imparted by the switches S1 and S2. This allows higher overall performances to be achieved in running of the motor.

Operation of the motor 100 with electronic control according to the invention will now be described. The electronic control allows various functions.

A first function is represented by protection against rotor blocking.

When the motor 100 is connected to the mains electrical supply 90, the microprocessor 83 begins to drive the switches S1 and S2 so as to power the motor 100 to set it in rotation. At the same time, the sensor 81 detects any rotation of the rotor 30 and accordingly sends signals to the microprocessor 83. If, within a predetermined time, the rotational speed of the rotor does not exceed a predetermined threshold, this means that the rotor is mechanically blocked or that the load applied to the drive shaft is high or that the friction between the turning and sliding members of the motor is excessive. The microprocessor 83 therefore ceases to drive the switches S1 and S2, thus interrupting the power supply to the motor. Consequently, the rotor is not forced to rotate and thus overheating followed by damage to the stator 20 is avoided.

The motor start-up procedure is repeated to see if an accidental block has occurred. If at the third attempt start-up is unsuccessful, the microprocessor 83 goes on stand-by and no longer accepts control signals to control the switches S1 and S2. The microprocessor 83 can leave its standby state only if the power supply is interrupted.

Another function of the electric motor with electronic control according to the invention is represented by control of the rotational speed of the rotor. Three possible speed control modes are provided (free speed mode, controlled speed mode, synchronous speed mode).

Free speed mode. In this first operating mode, the microprocessor 83 powers the motor 100 at the maximum available voltage. Thus, the rotor 30 accelerates until it reaches a variable speed which is given by the mechanical balance between the load resisting torque on the drive shaft and the motive torque. This is the maximum speed that the motor can reach with that given load.

Controlled speed mode. In this second operating mode, the microprocessor 83 powers the motor 100 at a variable voltage, so as to accelerate the rotor 30 until it is brought to a predetermined speed. Clearly, the predetermined speed is lower than that which can be reached with the first operating mode, since the supply voltage of the motor is lower than the maximum supply voltage imparted by the mains.

With the controlled speed mode a dual advantage is achieved. A first advantage is represented by the possibility of keeping the rotational speed of the rotor under control. This is a very important factor if the motor operates as a fan and it is necessary to control the airflow.

A second advantage is represented by the possibility of limiting the power consumption of the motor, avoiding having it operate needlessly at the maximum supply voltage.

Synchronous speed mode. In this third operating mode the microprocessor 83 powers the motor 100 at a variable voltage, so that the rotor accelerates with the same modes described in the controlled speed mode, until the rotor 30 reaches the synchronism speed imposed by the main supply.

As is known, the main supply 90 provides an alternating sinusoidal voltage Vi having a frequency of 50 Hz for Europe or 60 Hz for the USA. Said frequency is maintained by the electrical power provider within very narrow tolerance limits with maximum variations of +/- 1%. If a synchronous permanent magnet motor were powered directly at the mains voltage Vi, its rotational speed would be equal to the main supply frequency divided by the number of pole pairs of the motor. In the case in point the motor 100 has a stator winding with two pairs of poles, thus its rotational speed would be 1500 r.p.m. (synchronism speed imposed by the mains supply).

Once the rotor 30 reaches a speed approaching the speed of synchronism imposed by the main supply, as shown in Figure 3, an electronic synchronization circuit 85, per se known and therefore not explained in detail, detects the zero voltage crossings of the sinusoidal supply voltage Vi. The synchronization circuit 85 outputs synchronism pulses at the zero voltage crossings detected, thus it emits a pulse train at the mains frequency.

These synchronism pulses are sent to the microprocessor 83. The microprocessor 83 according to the synchronism pulses received, controls turning on/off of the switches S1 and S2, thus sending the motor an alternating voltage, in square wave form, at the same frequency as the frequency of the mains voltage and in phase therewith. In this manner precise control of the rotation speed of the rotor, which is locked to the mains synchronism, is obtained.

This third operating modality, compared with the first and second operating modality, has a considerable advantage in terms of sizing of the smoothing capacitors C1 and C2.

In fact, in the first and second operating modalities, there is no temporal relationship between the moment when the microprocessor 83 supplies a phase of the motor 100 and the flow patterns of the supply voltage Vi. This means that in general it will happen that the motor has to be powered and therefore provide energy at times when the supply voltage is close to zero. In these situations, it is up to the smoothing capacitors C1 and C2 to provide energy to the motor and therefore these capacitors are involved with currents with a high root-mean-square value. Thus in the case of the motor being supplied with a voltage having a different frequency from that of the mains voltage, turning on of the switches S1 and S2 will take place at entirely unrelated times with respect to the zero crossings of the mains voltage.

On the other hand, by keeping the motor speed locked with the mains synchronism, it is possible to supply a phase of the motor only when there is a half-wave of the same polarity as the supply voltage. That is to say, switching on of the switches S1 and S2 takes place exactly at the mains voltage zero crossings. In this manner the positive half-wave of the supply voltage of the motor will be in phase with the positive half-wave of the mains voltage and the same will apply for the respective negative half-waves.

In this way, the energy required to power the motor is actually taken directly from the mains supply 90, drastically reducing the effective current that involves the smoothing capacitors C1 and C2.

This third operating mode furthermore has the advantage of avoiding the absorbed power oscillations that occur in the second operating mode, when the rotational speed of the rotor imposed by the operator is near to the synchronism speed imposed by the mains.

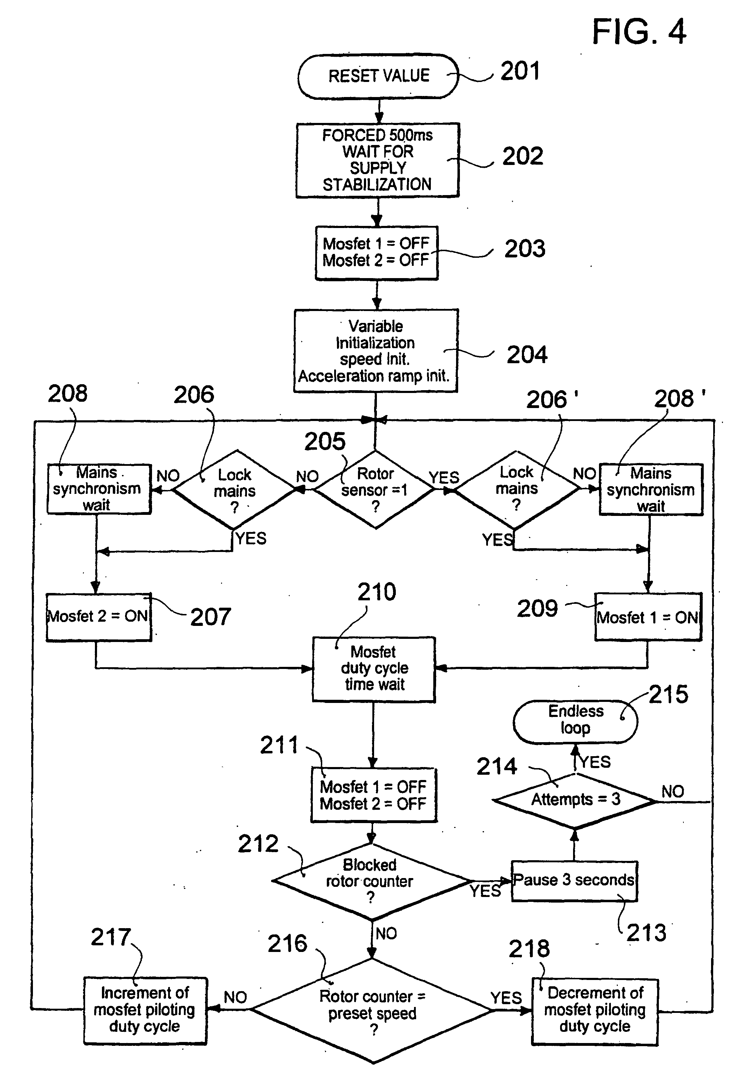

A flow chart which further explains operation of the motor 100 is illustrated hereunder with reference to Figure 4.

The first step 201 takes place when the motor 100 is connected to the power supply and involves a reset procedure in which all variables managed by the microprocessor 83 are reset. In the next step 202, the microprocessor 83 is on standby for a long enough period, for example 500 ms, to allow stabilization of the mains voltage.

Once this standby period is over, in step 203 the microprocessor 83 ensures that the switches S1 and S2 are off.

In step 204, the electronic program proceeds to initialisation of the variables managed by the microprocessor 83. The program can select the operating mode of the motor (free speed mode, controlled speed mode, synchronized speed mode). In the case of the regulated speed mode being selected, the program initialises the variable relating to the desired speed of the motor and thus the relative acceleration ramp.

At this point, in step 205, the sensor 81 detects the position of the rotor 30. That is to say, if the screening surface 61 of the screen 60 is inside the fork of the sensor 81 the sensor receiver does not receive any signal from the transmitter and thus does not send any signal to the microprocessor 83, thus indicating that the rotor 30 is in the position in which the screening surface is inside the sensor fork.

Step 206 is then performed in which it is checked if the rotor 30 is locked to the mains. That is to say, the device 85 for detection of the zero crossing reads the pattern of the mains voltage Vi. If a zero crossing of the mains voltage Vi is detected, the zero crossing detection device 85 sends a control signal to the microprocessor 83 which performs step 207 in which it turns on the switch S2.

If the zero crossing detection device 85 does not detect a zero crossing of the mains voltage Vi, it does not send any control signal to the microprocessor 83. The microprocessor 83 performs step 208 in which it is in stand-by of the mains synchronism. That is to say, the processor 83 waits for the supply voltage Vi to cross zero in order to carry out step 207 in which it turns on switch S2.

In the same way, if in step 205 the sensor receiver receives the signal from the transmitter, this means that the screening surface 61 is not within the sensor fork. On this basis, the sensor receiver sends a control signal to the microprocessor 83 which identifies the position of the rotor, in which the screening surface 61 is not within the sensor fork. At this point a step 206', substantially identical to step 206 is carried out, in which it is checked if the rotor 30 is locked to the mains.

If in step 206' the rotor proves to be locked to the mains the microprocessor receives a control signal and step 209 follows, in which it pilots turning on of the switch S1.

If in step 206' the rotor is not locked to the mains the microprocessor does not receive any control signal and performs step 208', substantially identical to step 208, in which it waits for the mains synchronism.

After steps 207 and 209 in which the switches S1 and S2 are on, step 210 is performed in which turning off of the switches is awaited. Obviously, if the switches S1 and S2 are two MOSFETs, the period that passes between turning on and turning off of the switch is equivalent to the duty cycle of the MOSFET.

After step 210 comes step 211 in which the two switches S1 and S2 are off. Turning on and off of the switches S1 and S2 has sent the motor a square-wave alternating voltage with a frequency equal to the frequency of the mains voltage Vi. Thus if the rotor 30 is not blocked, by virtue of said voltage it should start rotation and move from the starting position.

In this way, the sensor 81 detects the passage of the screening surface 61 and each passage of the screening surface corresponds to a revolution of the motor. At each revolution of the rotor 30, the microprocessor increases a counter which counts the number of revolutions of the motor.

At this point the rotor block control procedure is implemented. After step 211 in which the switches S1 and S2 are closed, the microprocessor 83, by means of step 212, controls the content of the motor revolution counter. If the content of the counter is lower than a predetermined value, this means that the rotor has not completed the revolutions it should have completed under normal conditions, from which it follows that the rotor 30 is blocked.

At this point the microprocessor carries out step 213, in which it pauses for a certain interval of time, for example 3 seconds, awaiting a possible return to normal operating conditions.

Step 214 is then carried out, in which the microprocessor stores the number of failed attempts at start-up of the motor in a variable and checks whether this variable exceeds a preset threshold, for example three attempts. If the predetermined threshold has not been exceeded, step 205 is returned to in order to begin a new attempt to start the rotor 30.

If the pre-set threshold has been exceeded, the microprocessor 83 performs step 215, in which it enters an endless loop and cannot receive other commands. The processor leaves the endless loop 215 if the power supply is interrupted and thus the supply is restored again by initiating the reset step 201.

If in step 212 the value of the motor revolution counter is greater than the predetermined threshold, this means that the rotor 30 is not blocked and step 216 is commenced in which the microprocessor checks the initialisation variables which identify the type of operating modality of the motor set by the operator.

If the user has not set any rotor speed setting, step 217 is next carried out, in which the piloting duty cycle of the switches S1 and S2 is increased, that is to say the root-square-mean value of the voltage which will power the rotor to set it in rotation is increased. After step 217, step 205 is repeated to synchronize the speed of rotation of the rotor with the voltage frequency of the mains supply.

If in step 216 the microprocessor detects that the user has set the operating modality at controlled speed and has set a variable with the desired rotor rotation speed value, step 218 is performed.

In step 218, the piloting duty cycle of the switches S1 and S2 is decreased. That is to say, in accordance with the speed preset by the program the root-square-mean value of the voltage which will power the rotor is decreased until the rotor turns at the preset speed. After step 218, step 205 is repeated to synchronize the speed of rotation of the rotor with the frequency of the mains voltage.

Numerous variations and modifications of detail within the reach of a person skilled in the art can be made to the present invention, without thereby departing from the scope of the invention, set forth in the appended claims.

## Claims

1. An electric motor (100) comprising:
- a stator (20) comprising a set of windings and integrally mounted on a motor casing (10),
- a rotor (30) positioned inside the stator (20) and rotatably mounted on the casing (10),
- an electronic control (80) for control of running of the motor, comprising:
- detector means (81) to detect the position of said rotor and the rotational speed of said rotor,
- switch means (S1, S2) able to open/close an electrical supply circuit to send the stator windings an alternating voltage signal for supply thereof;
- a microprocessor (83) connected to said detector means to receive signals therefrom indicating the position of the rotor and to said switch means to pilot opening/closing thereof so as to generate an alternating voltage signal for supply of the stator windings,
- a rectifying input stage (84) to convert the alternating mains voltage into a one-way pulsating voltage,
- an intermediate smoothing stage (C1, C2) to convert said pulsating one-way voltage leaving the input stage into a smooth direct voltage, and
- a commutation output stage, comprising said switch means (S1, S2) to convert said direct voltage output from the intermediate stage to alternating voltage for supply of the stator windings;
**characterized in that**
said electronic control (80) can be set to make the motor rum at synchronous speed, wherein the microprocessor receives signals from a synchronization device (85) indicating the mains voltage frequency, and in accordance with said received signals pilots said switch means (S1, S2) so that an alternating voltage locked to the mains voltage is applied to the stator windings.

2. An electric motor (100) according to claim 1, **characterized in that** said detector means comprise an optical sensor (81) able to detect the position of said rotor.

3. An electric motor (100) according to claim 2, **characterized in that** said optical sensor (81) is mounted on a plate (70) integral with the casing (10) and is fork-shaped with two arms forming an air gap (82), a transmitter and a receiver being provided respectively on said arms and there being mounted integrally on said rotor (30) a screen (60) comprising at least one screening surface (61) able to pass through the air gap of said fork-shaped sensor when said rotor is in rotation.

4. An electric motor (100) according to claim 1, **characterized in that** said detector means comprise a magnetic sensor able to detect the magnetic field produced by the rotor (30).

5. An electric motor (100) according to claim 4, **characterized in that** said magnetic sensor is a Hall effect sensor.

6. An electric motor (100) according to any one of the preceding claims, **characterized in that** said switch means are at least two field effect transistors (S1, S1).

7. An electric motor according to claim 6, **characterized in that** said at least two field effect transistors (S1, S1) are MOSFET transistors.

8. An electric motor (100) according to anyone of the preceding claims, **characterized in that** said rectifying input stage comprises a rectifier (84) comprising two diodes (D1, D2).

9. An electric motor (100) according to claim 8 or 9, **characterized in that** said intermediate smoothing stage comprises two smoothing capacitors (C1, C2).

10. An electric motor (100) according to any one of the preceding claims, **characterized in that** said synchronization device comprises a device (85) for detecting zero crossing of the mains voltage.

11. An electric motor (100) according to any one of the preceding claims, **characterized in that** it is a synchronous motor with a permanent magnet rotor (30).

12. An electric motor (100) according to any one of the preceding claims, **characterized in that** said electronic control (80) implements a rotor blocking control procedure comprising the following steps:
- detection of the number of revolutions of the rotor by said detection means (81) and storage of the number of revolutions detected in a variable of the microprocessor (83),
- comparison of the number of revolutions detected with a pre-set threshold value beneath which the rotor is presumably blocked, so that if the number of revolutions detected is lower than the pre-set threshold value the power supply to the motor can be suspended to avoid damaging the stator or else a new attempt at start-up can be made in the case of accidental blocking.

13. An electric motor (100) according to claim 12, **characterized in that** said rotor block procedure also comprises the step of comparing the number of attempts at start-up of the motor with a pre-set threshold number, so that if the number of start-up attempts carried out is below the pre-set threshold number, a new attempt to start the motor is carried out, and if it is above the pre-set threshold number, the microprocessor goes into a paused state in which it cannot receive commands and which it can leave by resetting of the electronic control.

14. An electric motor (100) according to any one of the preceding claims, **characterized in that** said electronic control (80) can be set to make the motor run at free speed, wherein the microprocessor (83) pilots the switches (S1, S2) at the maximum available voltage until the rotor reaches the maximum speed given by the balance between motive torque and resisting torque.

15. An electric motor (100) according to any one of the preceding claims, **characterized in that** said electronic control (80) can be set to make the motor run at controlled speed, wherein the operator sets a desired speed at which to make the rotor turn and the microprocessor (83) pilots the switches (S1, S2) at a variable voltage, until the rotor speed reaches said speed set by the operator.

## Patentansprüche

1. Elektromotor (100), der folgendes umfasst:
- einen Stator (20), der einen Satz Wicklungen umfasst und fest an ein Motorgehäuse (10) montiert ist,
- einen Rotor (30), der innen im Stator (20) liegt und drehbar am Gehäuse (10) befestigt ist,
- eine elektronische Steuerung (80) zur Steuerung des Motortriebs, die folgendes umfasst:
- Aufnahmeelemente (81) zur Festsellung der Position des genannten Rotors und der Umdrehungsgeschwindigkeit des genannten Motors,
- Schaltelemente (S1, S2), die einen elektrischen Speiseschaltkreis öffnen/schließen können, um den Statorwicklungen ein Wechselspannungssignal für deren Speisung zu senden,
- einen Mikroprozessor (83), der mit den genannten Aufnahmeelementen verbunden ist, um davon Signale zu erhalten, die die Position des Rotors angeben, und mit den genannten Schaltelementen, um deren Öffnung/Schließung zu steuern und ein Wechselspannungssignal zur Speisung der Statorwicklungen zu erzeugen,
- eine Gleichrichtungs-Eingangsstufe (84) zur Umwandlung der Wechselspannung der Hauptleitung in eine Impulsspanung gleichbleibender Richtung,
- eine Glättungs-Zwischenstufe (C1, C2) zur Umwandlung der genannten Impulsspannung gleichbleibender Richtung, die die Eingangstufe als eine geglättete Direktspannung hinterlässt, und
- eine Umschalt-Ausgangsstufe, die die genannten Schaltelemente (S1, S2) umfasst, um den genannten Direktspannungausgang von der Zwischenstufe auf Wechselspannung zur Speisung der Statorwicklungen umzuschalten;
**dadurch gekennzeichnet, dass**
- die genannte elektronische Steuerung (80) so eingestellt werden kann, dass der Motor mit Synchrongeschwindigkeit läuft, wobei der Mikroprozessor Signale von einer Sychronisierungsvorrichtung (85) empfängt, die die Spannungsfrequenz der Hauptleitung angibt und in Übereinstimmung mit den genannten empfangenen Signalen die genannten Schaltelemente (S1, S2) steuert, so dass eine auf die Hauptleitungsspannung blockierte Wechselspannung auf die Statorwicklungen angelegt wird.

2. Ein Elektromotor (100) gemäß Anspruch 1, **dadurch gekennzeichnet, dass** die genannten Aufnahmelemente einen optischen Sensor (81) umfassen, der die Position des genannten Rotors feststellen kann.

3. Ein Elektromotor (100) gemäß Anspruch 2, **dadurch gekennzeichnet, dass** der genannte optische Sensor (81) auf eine Platte (70) montiert ist, die einteilig mit dem Gehäuse (10) ist und die Form einer Gabel aufweist, mit zwei Armen, die einen Zwischenraum (82), einen Sender und einen Empfänger bilden, die jeweils an den genannten Armen vorgesehen sind, und dort ein Schirm (60) einteilig an dem genannten Rotor (30) montiert ist, der mindestens eine Abschirmfläche (61) umfasst, die durch den Zwischenraum des genannten gabelförmigen Sensors durchgehen kann, wenn der genannte Rotor sich in der Umdrehung befindet.

4. Ein Elektromotor (100) gemäß Anspruch 1, **dadurch gekennzeichnet, dass** die genannten Aufnahmeelemente einen Magnetsensor umfassen, der in der Lage ist, das durch den Rotor (30) erzeugte Mengetfeld festzustellen.

5. Ein Elektromotor (100) gemäß Anspruch 1, **dadurch gekennzeichnet, dass** der genannte Magnetsensor ein Hallsensor ist.

6. Ein Elektromotor (100) gemäß einem beliebigen der vorausgegangenen Ansprüche, **dadurch gekennzeichnet, dass** die genannten Schaltelemente mindestens zwei Feldeffekttransistoren (S1, S1) sind.

7. Ein Elektromotor (100) gemäß Anspruch 6, **dadurch gekennzeichnet, dass** die genannten mindestens zwei Feldeffekttransistoren (S1, S1) MOSFET-Transistoren sind.

8. Ein Elektromotor (100) gemäß einem beliebigen der vorausgegangenen Ansprüche, **dadurch gekennzeichnet, dass** die genannte gleichrichtende Eingangsstufe einen Gleichrichter (84) umfasst, der zwei Dioden (D1, D2) einschließt.

9. Ein Elektromotor (100) gemäß Anspruch 8 oder 9, **dadurch gekennzeichnet, dass** die genannte Glättungszwischenstufe zwei Glättungskondensatoren (C1, C2) umfasst.

10. Ein Elektromotor (100) gemäß einem beliebigen der vorausgegangenen Ansprüche, **dadurch gekennzeichnet, dass** die genannte Synchronisierungsvorrichtung eine Vorrichtung (85) zur Feststellung der Nulldurchgänge der Hauptleitungsspannung umfasst.

11. Ein Elektromotor (100) gemäß einem beliebigen der vorausgegangenen Ansprüche, **dadurch gekennzeichnet, dass** er ein Synchronmotor mit einem Permanentmagnetrotor (30) ist.

12. Ein Elektromotor (100) gemäß einem beliebigen der vorausgegangenen Ansprüche, **dadurch gekennzeichnet, dass** die genannte elektronische Steuerung (80) ein Rotorsperrverfahren implementiert, das folgende Schritte umfasst:
- Feststellung der Zahl der Umdrehungen des Rotors durch die genannten Aufnahmeelemente (81) und Speicherung der festgestellten Umdrehungszahl in einer Veriablen des Mikroprozessors (83);
- Vergleich der festgestellten Umdrehungszahl mit einem vorbestimmten Schwellenwert, unterhalb dessen der Motor vermutlich blockiert ist, so dass, falls die festgestellte Umdrehungszahl niedriger als der voreingestellte Schwellenwert sein sollte, die Speisung des Motors unterbrochen werden kann, um eine eventuelle Statorbeschädigung zu verhindern, bezw. im Fall einer versehentlichen Blockierung ein erneuter Anlassversuch unternommen werden kann.

13. Ein Elektromotor (100) gemäß Anspruch 12, **dadurch gekennzeichnet, dass** das genannte Rotorsperrungsverfahren ebenfalls den Schritt des Vergleichs der Anzahl von Anlassversuchen des Motors mit einer voreingestellen Schwellenzahl umfasst, so dass, falls die Anzahl der durchgeführten Anlassversuche unter der voreingestellten Schwellenzahl liegt, ein neuer Versuch, den Motor anzulassen, durchgeführt wird, und, falls sie über der voreingestellten Zahl liegt, der Mikroprozessor sich auf einen Pausenzustand stellt, in dem er keine Befehle erhalten kann und den er durch Neueinstellung der elektronischen Steuerung verlassen kann.

14. Ein Elektromotor (100) gemäß einem beliebigen der vorausgegangenen Ansprüche, **dadurch gekennzeichnet, dass** die genannte elektronische Steuerung (80) so eingestellt werden kann, dass der Motor mit freier Geschwindigkeit läuft, wobei der Mikroprozessor (83) die Schalter (S1, S2) mit der maximal verfügbaren Spannung steuert, bis der Rotor die Höchstgeschwindigkeit erreicht, die durch das Gleichgewicht zwischen dem Antriebsdrehmoment und dem Gegenmoment gegeben wird.

15. Ein Elektromotor (100) gemäß einem beliebigen der vorausgegangenen Ansprüche, **dadurch gekennzeichnet, dass** die genannte elektronische Kontrolle (80) so eingestellt werden kann, dass der Motor mit gesteuerter Geschwindigkeit läuft, wobei der Bediener eine gewünschte Geschwindigkeit einstellt, mit der der Rotor sich drehen soll und der Mikroprozessor (83) die Schalter (S1, S2) mit variabler Spannung steuert, bis die Rotorgeschwindigkeit jeweils die genannte, durch den Bediener eingestellte Geschwindigkeit erreicht hat.

## Revendications

1. Moteur électrique (100) comprenant :
- un stator (20) comprenant un groupe d'enroulements et monté solidairement sur un châssis de moteur (10),
- un rotor (30) placé à l'intérieur du stator (20) et monté de façon rotative sur le châssis (10),
- un contrôle électronique (80) pour contrôler le fonctionnement du moteur, comprenant :
- des dispositifs de détection (81) pour relever la position dudit rotor et la vitesse de rotation dudit rotor,
- des dispositifs d'interruption (S1, S2) en mesure d'ouvrir/de fermer un circuit d'alimentation électrique pour envoyer aux enroulements du stator un signal de tension alternée pour leur alimentation,
- un microprocesseur (83) relié aux dits dispositifs de détection pour recevoir des signaux de ceux-ci indiquant la position du rotor et aux dits dispositifs d'interruption pour piloter l'ouverture/la fermeture de façon à créer un signal de tension alternée pour l'alimentation des enroulements du stator,
- un stade d'entrée de redressement (84) pour convertir la tension de secteur alternée en une tension de pulsation à un sens,
- un stade de mise à niveau intermédiaire (C1, C2) pour convertir ladite tension de pulsation à un sens laissant le stade d'entrée à une tension directe égalisée, et
- un stade de sortie de commutation, comprenant lesdits dispositifs d'interruption (S1, S2) pour convertir ladite sortie de tension directe du stade intermédiaire à la tension alternée pour alimenter les enroulements du stator ;
**caractérisé en ce que** ledit contrôle électronique (80) peut être défini pour faire fonctionner le moteur à une vitesse synchrone, où le microprocesseur reçoit des signaux d'un dispositif de synchronisation (85) indiquant la fréquence de la tension de secteur, et conformément aux dits signaux reçus pilote lesdits dispositifs d'interruption (S1, S2) de manière à ce qu'une tension alternée bloquée sur la tension de secteur soit appliquée aux enroulements du stator.

2. Moteur électrique (100) selon la revendication 1, **caractérisé en ce que** lesdits dispositifs de détection comprennent un capteur optique (81) en mesure de relever la position dudit rotor.

3. Moteur électrique (100) selon la revendication 2, **caractérisé en ce que** ledit capteur optique (81) est monté sur une plaque (70) solidaire au châssis (10) et a une forme de fourche avec deux bras formant un espace (82), un transmetteur et un récepteur étant pourvus respectivement sur lesdits bras, et un écran (60) comprenant au minimum une surface formant un écran (61) en mesure de passer à travers l'espace dudit capteur en forme de fourche quand ledit rotor est en rotation, étant monté solidairement sur ledit rotor (30).

4. Moteur électrique (100) selon la revendication 1, **caractérisé en ce que** lesdits dispositifs de détection comprennent un capteur magnétique en mesure de relever le champ magnétique produit par le rotor (30).

5. Moteur électrique (100) selon la revendication 4, **caractérisé en ce que** ledit capteur magnétique est un capteur à effet Hall.

6. Moteur électrique (100) selon une revendication quelconque parmi les revendications susmentionnées, **caractérisé en ce que** lesdits dispositifs d'interruption sont au minimum deux transistors à effet de champ (S1, S1).

7. Moteur électrique selon la revendication 6, **caractérisé en ce que** lesdits au minimum deux transistors à effet de champ (S1, S1) sont des transistors MOSFET.

8. Moteur électrique (100) selon une revendication quelconque parmi les revendications susmentionnées, **caractérisé en ce que** ledit stade d'entrée de redressement comprend un redresseur (84) comprenant deux diodes (D1, D2).

9. Moteur électrique (100) selon la revendication 8 ou 9, **caractérisé en ce que** le stade de mise à niveau intermédiaire comprend deux condensateurs de mise à niveau (C1, C2).

10. Moteur électrique (100) selon une revendication quelconque parmi les revendications susmentionnées, **caractérisé en ce que** ledit dispositif de synchronisation comprend un dispositif (85) de relevé du passage par zéro de la tension de secteur.

11. Moteur électrique (100) selon une revendication quelconque parmi les revendications susmentionnées, **caractérisé en ce que** c'est un moteur synchrone avec un rotor (30) à aimants permanents.

12. Moteur électrique (100) selon une revendication quelconque parmi les revendications susmentionnées, **caractérisé en ce que** ledit contrôle électronique (80) implémente une procédure de contrôle du blocage du rotor comprenant les phases suivantes :
- relevé du nombre de tours du rotor par lesdits dispositifs de détection (81) et mémorisation du nombre de tours relevés dans une variable du microprocesseur (83),
- comparaison du nombre de tours relevés avec une valeur de seuil prédéfinie au-dessous de laquelle le rotor est vraisemblablement bloqué, de sorte que si le nombre de tours relevés est inférieur à la valeur de seuil prédéfinie, l'alimentation du moteur peut être suspendue afin d'éviter tout endommagement du stator ou qu'une nouvelle tentative de démarrage peut être effectuée en cas de blocage accidentel.

13. Moteur électrique (100) selon la revendication 12, **caractérisé en ce que** ladite procédure de blocage du rotor comprend également la phase de comparaison du nombre de tentatives de démarrage du moteur avec un nombre seuil prédéfini, de sorte que si le nombre de tentatives de démarrage réalisées est inférieur au nombre seuil prédéfini, une nouvelle tentative de démarrage du moteur est effectuée, et s'il dépasse le nombre seuil prédéfini, le microprocesseur se met en état de pause dans lequel il ne peut pas recevoir de commandes et duquel il peut sortir au moyen de la remise à zéro du contrôle électronique.

14. Moteur électrique (100) selon une revendication quelconque parmi les revendications susmentionnées, **caractérisé en ce que** ledit contrôle électronique (80) peut être défini pour faire fonctionner le moteur à une vitesse libre, où le microprocesseur (83) pilote les interrupteurs (S1, S2) à la tension maximale disponible jusqu'à ce que le rotor atteigne la vitesse maximale donnée par l'équilibre entre le couple du moteur et le couple résistant.

15. Moteur électrique (100) selon une revendication quelconque parmi les revendications susmentionnées, **caractérisé en ce que** ledit contrôle électronique (80) peut être défini pour faire fonctionner le moteur à une vitesse contrôlée, où l'opérateur définit une vitesse désirée à laquelle faire tourner le rotor et le microprocesseur (83) pilote les interrupteurs (S1, S2) à une tension variable, jusqu'à ce que la vitesse du rotor atteigne ladite vitesse définie par l'opérateur.
